(19) **Europäisches Patentamt / European Patent Office / Office européen des brevets**

(11) **EP 3 519 184 B1**

(12) # EUROPEAN PATENT SPECIFICATION

(45) Date of publication and mention
of the grant of the patent:
**15.07.2020 Bulletin 2020/29**

(51) Int Cl.:
**B32B 27/08** *(2006.01)*       **B32B 27/30** *(2006.01)*
**B32B 27/32** *(2006.01)*

(21) Application number: **17769163.1**

(22) Date of filing: **08.09.2017**

(86) International application number:
**PCT/US2017/050604**

(87) International publication number:
**WO 2018/063775 (05.04.2018 Gazette 2018/14)**

(54) **MULTILAYER COEXTRUDED FILM FOR CONTROLLING GREASE MIGRATION**

KOEXTRUDIERTE MEHRSCHICHTFOLIE ZUR KONTROLLE DER MIGRATION VON SCHMIERFETT

FILM COEXTRUDÉ MULTICOUCHE POUR RÉGULER LA MIGRATION DE GRAISSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2016 US 201662401515 P**

(43) Date of publication of application:
**07.08.2019 Bulletin 2019/32**

(73) Proprietor: **Dow Global Technologies LLC**
**Midland, MI 48674 (US)**

(72) Inventors:
• **BARRENECHE, Felipe Martinez**
**Lake Jackson, TX 77566 (US)**

• **MAZZOLA, Nicolas Cardoso**
**Jundiai/SP, 13214-73 (BR)**
• **CANTU, Marcelo Delmar**
**Jundiai/SP, 13214-730 (BR)**
• **BARBOSA, Felipe Dantas**
**Jundiai/SP, 13214-730 (BR)**

(74) Representative: **Boult Wade Tennant LLP**
**Salisbury Square House**
**8 Salisbury Square**
**London EC4Y 8AP (GB)**

(56) References cited:
**WO-A1-2012/078129      US-B2- 7 629 278**

**Description**

**CROSS-REFERENCE TO RELATED APPLICATIONS**

This application claims the benefit of U.S. Provisional Application Serial 62/401,515, filed September 29, 2016.

**TECHNICAL FIELD**

Embodiments described herein relate generally to multilayer coextruded films, and more particularly to multilayer films with at least one oil barrier layer and at least one oil and grease absorbing layer. Such multilayer coextruded film can be used as packaging for oily or greasy items, while providing reduction of migration of oil and grease to external layers of the multilayer film.

**BACKGROUND**

The retention of oil and grease within polymer film packages is currently a challenge. In consumer and manufacturing segments, the need to retain oil and grease within a package are common demands for sectors such as food pouches or packaging for pet food. Currently, high density polyethylene (HDPE) resins or polyamides (PA) are commonly relied upon to provide a barrier layer in a coextruded film to prevent migration of oil or grease to the exterior of packaging or to an intermediate lamination layer. However, a barrier layer is not impervious to oil and grease and migration of oil and grease is not entirely prevented such that over time the oil and grease is able to reach the exterior of the packaging.
A key desired attribute of a multilayer film for packaging oily or greasy items is minimizing the migration of the oil and grease and maximizing the time for oil or grease to pass through the multilayer film. However, as barrier layers with HDPE or PA, for example, are not impervious to oil and grease, alternative multilayer films are required to further improve packaging performance. Thus, there is a need in the art for alternative structures that further decrease the migration of oil or grease through a multilayer coextruded film.
WO 2012/078129 relates to dispensers formed from laminates of polymers and foil, and more specifically to collapsible dispensers particularly suited to contain and dispense pastes, gels and creams.

**SUMMARY**

In the first aspect of the invention there is provided the multilayer coextruded film of claim 1, further aspects of the invention are set out in the dependent claims.
Embodiments of the present disclosure meet those needs by providing multilayer coextruded films comprising at least one oil and grease absorbing layer in addition to an oil barrier layer. The multilayer coextruded films may be used as packaging, and more particularly as packaging for oily or greasy food products. The multilayer coextruded films exhibit reduced oil and grease migration and permeability properties with the addition of the at least one oil and grease absorbing layer to absorb and curb the migration of the oil or grease.
According to at least one embodiment of the present disclosure, a multilayer coextruded film is provided. The multilayer coextruded film includes at least one oil and grease absorbing layer and at least one oil barrier layer, wherein at least one oil and grease absorbing layer includes at least one styrenic block copolymer, wherein the at least one oil and grease absorbing layer further comprises maleic anhydride grafted polyolefin. Further, each oil barrier layer includes one or more polyolefins. In some embodiments the multilayer coextruded film also includes an interior sealing layer. In other embodiments the multilayer coextruded film additionally includes an exterior finishing layer, wherein the at least one oil barrier layer and the at least one oil and grease absorbing layer are disposed between the interior sealing layer and the exterior finishing layer.
According to additional embodiments of the present disclosure, a multilayer coextruded film is provided. The multilayer coextruded film includes at least one oil and grease absorbing layer, at least one oil barrier layer, and an interior sealing layer. The at least one oil and grease absorbing layer includes at least one styrenic block copolymer, at least one polyolefin elastomer, or combinations thereof. Further, each oil barrier layer includes one or more polyolefins. Further, at least one of the oil and grease absorbing layers is disposed between the interior sealing layer and the at least one oil barrier layer.
According to yet additional embodiments of the present disclosure, a multilayer coextruded film is provided. The multilayer coextruded film includes at least one oil and grease absorbing layer, at least one oil barrier layer, and an interior sealing layer. The at least one oil and grease absorbing layer includes at least one styrenic block copolymer, at least one polyolefin elastomer, or combinations thereof. Further, each oil barrier layer includes one or more polyolefins. Further, at least one of the oil barrier layers is disposed between the interior sealing layer and the at least one oil and grease absorbing layer.

These and other embodiments are described in more detail in the Detailed Description.

## BRIEF DESCRIPTION OF THE DRAWINGS

FIG. 1 is a schematic depicting the layer structure of a multilayer coextruded film with an interior sealing layer, an oil and grease absorbing layer, and an oil barrier layer in accordance with one or more embodiments of this disclosure.

FIG. 2 is a schematic depicting the layer structure of a multilayer coextruded film with an interior sealing layer, an oil and grease absorbing layer, an oil barrier layer, a core layer, and an exterior finishing layer in accordance with one or more embodiments of this disclosure.

FIG. 3 is a schematic depicting the layer structure of a multilayer coextruded film with an interior sealing layer, two oil and grease absorbing layers, an oil barrier layer, and an exterior finishing layer in accordance with one or more embodiments of this disclosure.

FIG. 4 is a schematic depicting the layer structure of a multilayer coextruded film with an interior sealing layer, an oil barrier layer, two oil and grease absorbing layers, and an exterior finishing layer in accordance with one or more embodiments of this disclosure.

FIG. 5 is a schematic depicting the layer structure of a multilayer coextruded film with an interior sealing layer, an oil and grease absorbing layer, two oil barrier layers, and an exterior finishing layer in accordance with one or more embodiments of this disclosure.

FIG. 6 is a schematic depicting the layer structure of a multilayer coextruded film with an interior sealing layer, an oil and grease absorbing layer, an oil barrier layer, an additional oil and grease absorbing layer, and an exterior finishing layer in accordance with one or more embodiments of this disclosure.

FIG. 7 is a schematic depicting the layer structure of a multilayer coextruded film with an interior sealing layer, an oil barrier layer, an oil and grease absorbing layer, an additional oil barrier layer, and an exterior finishing layer in accordance with one or more embodiments of this disclosure.

FIG. 8 is a schematic depicting the layer structure of a multilayer coextruded film with a combined interior sealing layer and oil and grease absorbing layer, and an oil barrier layer in accordance with one or more embodiments of this disclosure.

FIG. 9 is a graph depicting oil absorption in a multilayer film on a mass basis.

FIG. 10 is a graph depicting oil absorption in a multilayer film on an increase in film thickness basis.

## DETAILED DESCRIPTION

Reference will now be made in detail to various embodiments of the instantly disclosed multilayer coextruded films **10** which include a combination of oil barrier layer(s) 30 and oil and grease absorbing layer(s) 20. The multilayer coextruded film **10** can be used as packaging, such as food packaging, and is particularly suited for packaging of oily or greasy items. Embodiments of the multilayer coextruded film **10** may provide advantages over prior packaging as the multilayer coextruded film **10** is configured to retain oil and grease within a package formed from the multilayer coextruded film **10**.

Unless otherwise indicated, the disclosure of any ranges in the specification and claims are to be understood as including the range itself and also anything subsumed therein, as well as endpoints.

In various embodiments, a multilayer coextruded film **10** includes a combination of at least one oil barrier layer **30** and at least one oil and grease absorbing layer **20**. The oil and grease absorbing layer **20** includes at least one styrenic block copolymer, at least one polyolefin elastomer, or combinations thereof. The oil barrier layer **30** includes one or more polyolefins.

In one or more embodiments, a multilayer coextruded film **10** includes a combination of oil barrier layer(s) 30, oil and grease absorbing layer(s) 20 and additionally an interior sealing layer **40**. The interior sealing layer **40** is provided on an interior surface of the multilayer coextruded film **10** when the multilayer coextruded film **10** is formed into a package.

In one or more embodiments the oil and grease absorbing layer **20** is disposed between the interior sealing layer **40** and the oil barrier layer **30**. A multilayer coextruded film **10** is formed with the interior sealing layer **40** and the oil barrier layer **30** providing the outermost layers and various combinations of additional oil barrier layers **30** and the oil and grease absorbing layer **20** providing layers therebetween. In further embodiments, the oil barrier layer **30** is disposed between the interior sealing layer **40** and the oil and grease absorbing layer **20**. A multilayer coextruded film 10 is formed with the interior sealing layer **40** and the oil and grease absorbing layer **20** providing the outermost layers and various combinations of additional oil and grease absorbing layers **20** and the oil barrier layer **30** providing layers therebetween.

In various embodiments, a multilayer coextruded film **10** includes a combination of oil barrier layer(s) 30 and oil and grease absorbing layer(s) 20 as well as an interior sealing layer **40** and an exterior finishing layer **50**. In one or more embodiments the oil barrier layer **30** and the oil and grease absorbing layer **20** are disposed between the interior sealing layer **40** and the exterior finishing layer **50**. A multilayer coextruded film **10** is formed with the interior sealing layer **40** and the exterior finishing layer **50** providing the outermost layers and various combinations of the oil barrier layers **30** and the oil and grease absorbing layers **20** providing layers therebetween.

The oil and grease absorbing layer **20** comprises at least one styrenic block copolymer. In various embodiments, the styrenic block copolymer is selected from styrene-butadiene-styrene, styrene-isoprene-styrene, styrene-ethylene/butylene-styrene, or combinations thereof. It will be appreciated by one having skill in the art that there are additional styrenic block copolymers which may equally be utilized as a component of the one oil and grease absorbing layer **20**.

In various embodiments, the oil and grease absorbing layer **20** comprises 5 to 99 % by weight styrenic block copolymer, 10 to 75 % by weight styrenic block copolymer, 15 to 70 % by weight styrenic block copolymer, 20 to 60 % by weight styrenic block copolymer, or 30 to 55 % by weight styrenic block copolymer.

In some embodiments, the oil and grease absorbing layer **20** comprises styrene-butadiene-styrene. In various embodiments, the oil and grease absorbing layer **20** comprises 5 to 99 % by weight styrene-butadiene-styrene, 10 to 75 % by weight styrene-butadiene-styrene, 15 to 70 % by weight styrene-butadiene-styrene, 20 to 60 % by weight styrene-butadiene-styrene, or 30 to 55 % by weight styrene-butadiene-styrene.

In various embodiments, the oil and grease absorbing layer **20** comprises a polyolefin, for example and not by way of limitation, polypropylene, polyethylene, or combinations thereof. The polypropylene, polyethylene, or combinations thereof may be blended with the at least one styrenic block copolymer. In various embodiments, the oil and grease absorbing layer **20** comprises 20 to 99 % by weight polyolefin, 25 to 75 % by weight polyolefin, 30 to 70 % by weight polyolefin, 35 to 65 % by weight polyolefin, or 40 to 60 % by weight polyolefin. Similarly, in various embodiments, the oil and grease absorbing layer **20** comprises 20 to 99 % by weight polyethylene, 25 to 75 % by weight polyethylene, 30 to 70 % by weight polyethylene, 35 to 65 % by weight polyethylene, or 40 to 60 % by weight polyethylene. It will be appreciated that the oil and grease absorbing layer **20** may also comprise a combination of polyethylene and polypropylene at 20 to 99 % by weight, 25 to 75 % by weight, 30 to 70 % by weight, 35 to 65 % by weight, or 40 to 60 % by weight.

Various polyethylene resins are contemplated herein. In various embodiments, the oil and grease absorbing layer **20** comprises polyethylene selected from high density polyethylene (HDPE), medium density polyethylene (MDPE), linear low-density polyethylene (LLDPE), enhanced polyethylene resins (EPE), ultra-low density polyethylene, or combinations thereof. Examples of suitable commercial polymers may include ELITE™ 5400 G (a LLDPE), ELITE™ 5960G (an EPE), ELITE™ 5940G (a MDPE), DOWLEX™ 2038.68 (a MDPE), ELITE™ 5400G (an EPE), DOWLEX™ 2045G (a LLDPE), and ATTANE™ 4203G (an ULDPE), each from The Dow Chemical Company, Midland, MI.

The oil and grease absorbing layer **20** comprises a functionalizer, for example maleic-anhydride, to form a functionalized polymer. In various embodiments, the oil and grease absorbing layer **20** comprises 1 to 40 % by weight maleic-anhydride modified polyolefin, 2 to 35 % by weight maleic-anhydride modified polyolefin, 3 to 30 % by weight maleic-anhydride modified polyolefin, 5 to 25 % by weight maleic-anhydride modified polyolefin, or 10 to 20 % by weight maleic-anhydride modified polyolefin. The maleic-anhydride modified polyolefin may comprise 0.5 to 8 % maleic-anhydride by weight. It will be appreciated that additional or substituted functionalizers may be utilized at the same or similar % by weight as discussed for maleic-anhydride to achieve the desired polymer characteristics. Without wishing to be bound by theory, it is believed that the carboxyl group which is part of maleic anhydride reacts with the -OH functional group in grease and oil products. The interaction between the -OH functional group in grease and oil products and the carboxyl group in the maleic anhydride improves grease retention as the entire grease product is retained by the maleic anhydride containing polymer along with the -OH group.

In some embodiments, the oil and grease absorbing layer **20** comprises a polyolefin elastomer in addition to a styrenic block copolymer. A suitable commercial may be ENGAGE™ polyolefin elastomers from The Dow Chemical Company, Midland, MI. In further embodiments, anhydride modified copolymers based on styrenic and ethylenic copolymers may be utilized in the oil and grease absorbing layer **20**. A suitable commercial may be OREVAC® 18910 from Arkema, Colombes, France.

In other embodiments, the oil and grease absorbing layer **20** comprises a blend of styrenic block copolymer (for example, styrene-butadiene-styrene), polyolefin (for example, polyethylene), and weight maleic-anhydride. It will be appreciated that the disclosed weight percentages for the components of the oil and grease absorbing layer **20** may be viewed in combination to provide numerous overall compositions of the oil and grease absorbing layer **20**. For example, the multilayer coextruded film **10** may have at least one oil and grease absorbing layer **20** comprising 20 to 50 % by weight styrene-butadiene-styrene, 35 to 65 % by weight polyethylene, and 5 to 25 % by weight maleic-anhydride modified polyolefin. One suitable commercial example is AMPLIFY™ TY 3351B from The Dow Chemical Company, Midland, MI. Additionally, it will be appreciated that each oil and grease absorbing layer **20** in a multilayer coextruded film **10** having multiple oil and grease absorbing layers **20** may have distinct compositions to provide differing properties including flexural modulus, melting point, oil absorptivity, and elasticity for example.

As stated above, the oil barrier layer **30** comprises one or more polyolefins. The polyolefins may include homopolymers or polymers comprising one or more of $C_2$-$C_{12}$ polymers, for example, polyethylene and polypropylene. In various embodiments, the oil barrier layer **30** comprises polyethylene selected from high density polyethylene, medium density polyethylene, linear low-density polyethylene, ultra-low density polyethylene, or combinations thereof. Examples of suitable commercial polymers may include ELITE™ 5400 G (a LLDPE), ELITE™ 5960G (a HDPE), ELITE™ 5940G (a MDPE), DOWLEX™ 2038.68 (a MDPE), ELITE™ 5400G (an EPE), DOWLEX™ 2045G (a LLDPE), and ATTANE™ 4203G (an ULDPE), each from The Dow Chemical Company, Midland, MI.

The interior sealing layer **40** provides a coextruded film layer configured to allow thermal sealing of a folded multilayer coextruded film **10** into a hermetically sealed package. In various embodiments, the interior sealing layer **40** comprises polyethylene including linear low-density polyethylene, ethylene vinyl acetate (EVA), polyolefin plastomers (POP), or combinations thereof. Suitable commercial examples include the AFFINITY™, SEALUTION™, and VERSIFY™ products from The Dow Chemical Company, Midland, MI. Specific additional suitable commercial examples include DOWLEX™ 2045G (a LLDPE), ELITE™ 5400G (an EPE), ELITE™ AT 6202, ELITE™ AT 6401, and Affinity™ 1880. In some embodiments, the interior sealing layer **40** comprises EVA resins with a vinyl acetate content of 3 to 20 % by weight. For example, an EVA resin with a vinyl acetate content of 4, 9, 12, or 18 % by weight.

In various embodiments, the exterior finishing layer **50** comprises polyethylene including linear low-density polyethylene, high density polyethylene, medium density polyethylene, ultra-low density polyethylene, low-density polyethylene (LDPE), metallocene linear low-density polyethylene (mLLDPE), ethylene vinyl acetate, polyolefin plastomers, or combinations thereof. Examples of suitable commercial polymers may include ELITE™ 5400 G (a LLDPE), ELITE™ 5960G (an EPE), ELITE™ 5940G (a MDPE), DOWLEX™ 2038.68 (a MDPE), and DOWLEX™ 2045G (a LLDPE), each from The Dow Chemical Company, Midland, MI.

In certain embodiments, the interior sealing layer **40** and the exterior finishing layer **50** are the same polyolefin. In other embodiments, the interior sealing layer **40** and the exterior finishing layer **50** are different polyolefins.

In some embodiments, the multilayer coextruded film **10** may include a core layer **60**. The core layer **60** may provide additional desirable characteristics to the multilayer coextruded film **10** not necessarily provided by the remaining layers of the multilayer coextruded film **10**. For example, the core layer 60 may provide an ultraviolet (UV) barrier, an oxygen barrier, increased opacity or translucency of the multilayer coextruded film **10**, antibacterial properties, or any other desirable property for polymer films known to those having skill in the art. Further, the core layer **60** may provide additional film thickness or rigidity to the overall multilayer coextruded film **10** without requiring the potentially more costly polymers utilized for the exterior finishing layer **50**, the oil and grease absorbing layer **20**, the oil barrier layer **30**, or the interior sealing layer **40**. It will further be appreciated that the above mentioned properties may also potentially be achieved through the addition of additives or resin blends to one or more of the exterior finishing layer **50**, the oil and grease absorbing layer **20**, the oil barrier layer **30**, or the interior sealing layer **40**.

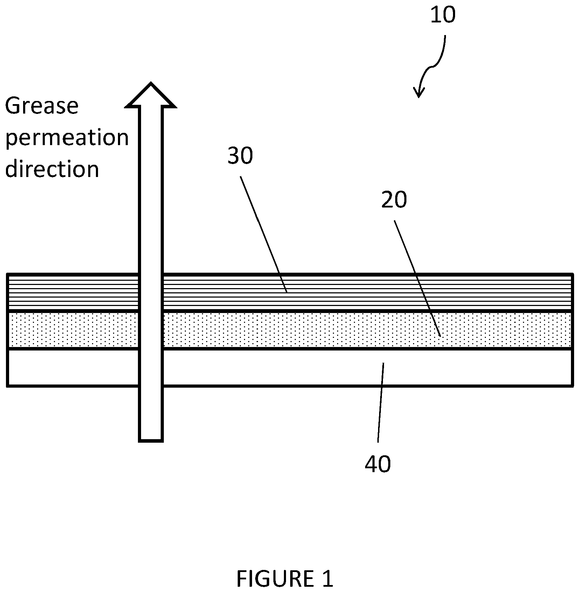

As previously discussed, the distinct layers of the multilayer coextruded film **10** may be arranged in numerous sequences. Specifically, the potential combinations of the oil and grease absorbing layer **20** and the oil barrier layer **30**, in addition to the interior sealing layer **40** and exterior finishing layer **50** when present, are abundant. With reference to FIG. 1, a schematic of the layer structure of the multilayer coextruded film **10** according to some embodiments is provided. The multilayer coextruded film **10** includes an interior sealing layer **40**, a single oil and grease absorbing layer **20**, and a single oil barrier layer **30** arranged in a manner such that grease permeation would be from the interior sealing layer **40**, through the oil and grease absorbing layer **20**, and finally to the oil barrier layer **30**.

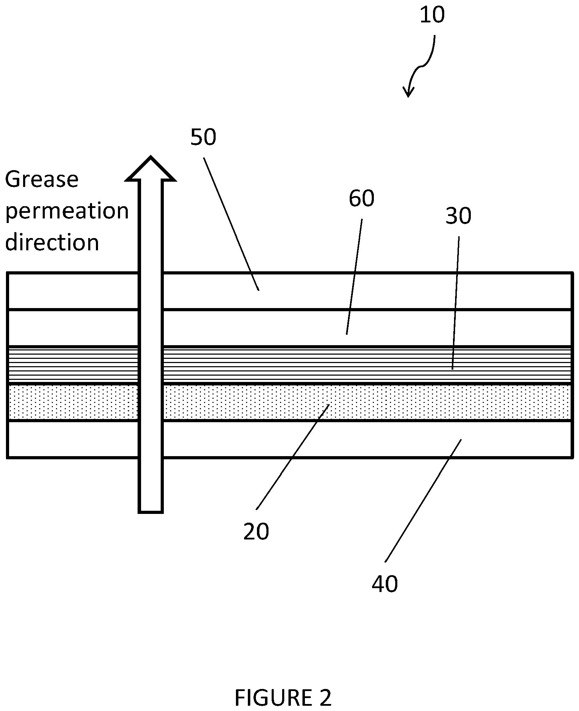

With reference to FIG. 2, a schematic of the layer structure of the multilayer coextruded film **10** according to some embodiments is provided. The multilayer coextruded film **10** includes an interior sealing layer **40**, a single oil and grease absorbing layer **20**, a single oil barrier layer **30**, a single core layer **60**, and an exterior finishing layer **50** arranged in a manner such that grease permeation would be from the interior sealing layer **40**, through the intermediate layers, and finally to the exterior finishing layer **50**.

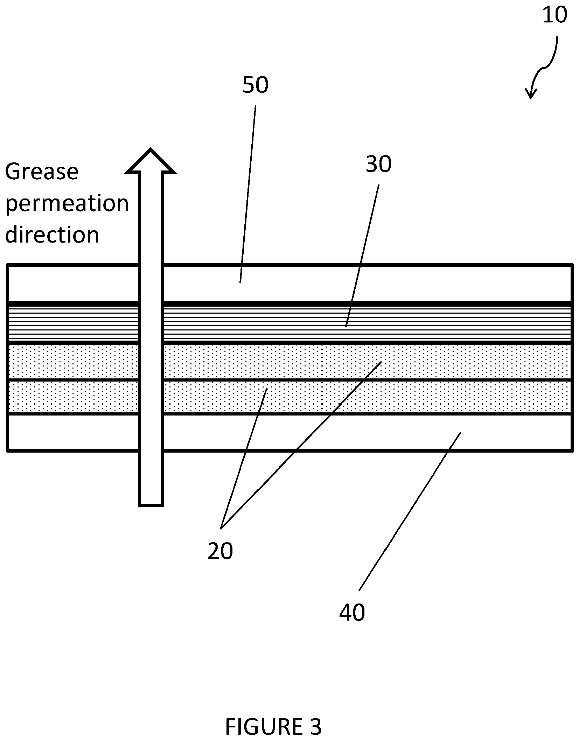

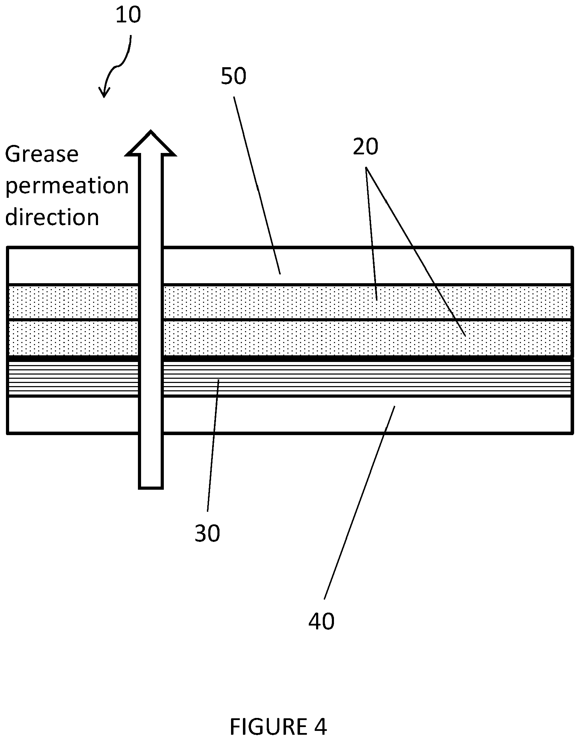

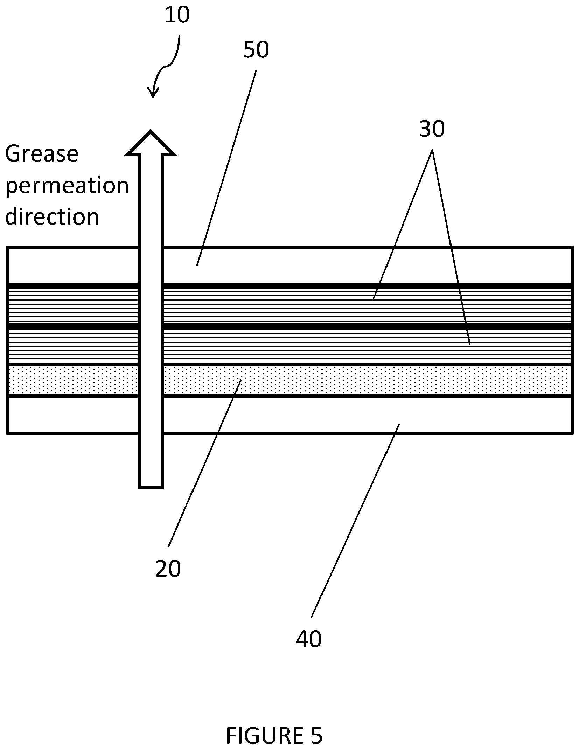

With reference to FIGS 3, 4, and 5, schematics of the layer structure of the multilayer coextruded film **10** according to multiple embodiments are provided. As shown in FIGS. 3 and 4, in some embodiments, the multilayer coextruded film **10** includes an interior sealing layer **40**, two oil and grease absorbing layers **20**, a single oil barrier layer **30**, and an exterior finishing layer **50**. The two oil and grease absorbing layers **20** may be more proximal the interior sealing layer **40** that the oil barrier layer **30** as illustrated in FIG. 3 or the oil barrier layer **30** may be more proximal the interior sealing layer **40** than the two oil and grease absorbing layers **20** as illustrated in FIG. 4. Similarly, as shown in FIG. 5, in some embodiments, the multilayer coextruded film **10** includes an interior sealing layer **40**, a single oil and grease absorbing layer **20**, two oil barrier layers **30**, and an exterior finishing layer **50**. Albeit not illustrated, it will be appreciated that the two oil barrier layers **30** may also be more proximal the interior sealing layer **40** than the oil and grease absorbing layer **20**. The layers in each case are arranged in a manner such that grease permeation would be from the interior sealing layer **40**, through the intermediate layers, and finally to the exterior finishing layer **50**. It will be appreciated that additional oil and grease absorbing layers **20**, additional oil barrier layers **30**, one or more core layers **60**, or combinations thereof may be added to create a multilayer coextruded film **10** with more than the five layers shown in FIGS 3, 4, and 5. For example, the multilayer coextruded film **10** may include an interior sealing layer **40**, three oil and grease absorbing layers **20**, two oil barrier layers **30**, and an exterior finishing layer **50**.

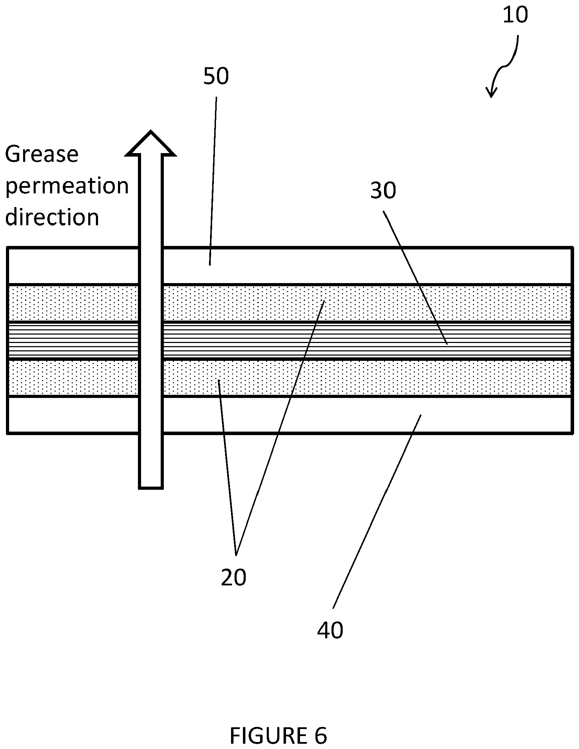

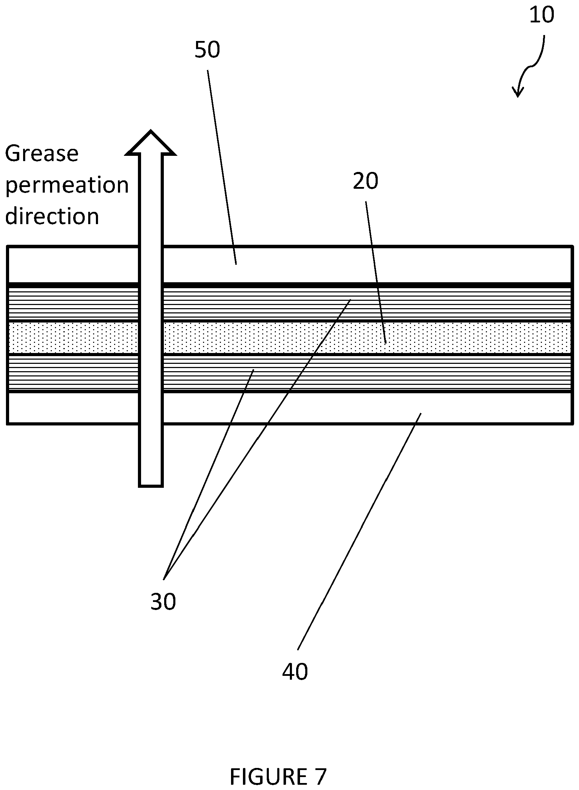

With reference to FIGS 6 and 7, schematics of the layer structure of the multilayer coextruded film **10** according to multiple embodiments are provided. As shown in FIG. 5, in some embodiments, the multilayer coextruded film **10** includes an interior sealing layer **40**, two oil and grease absorbing layers **20**, a single oil barrier layer **30**, and an exterior finishing layer **50** where the oil barrier layer **30** is disposed between the two oil and grease absorbing layers **20**. Similarly, as shown in FIG. 6, in some embodiments, the multilayer coextruded film **10** includes an interior sealing layer **40**, a single oil and grease absorbing layer **20**, two oil barrier layers **30**, and an exterior finishing layer **50** where the oil and grease absorbing layer **20** is disposed between the two oil barrier layers **30**. The layers in each case are arranged in a manner such that grease permeation would be from the interior sealing layer **40**, through the intermediate layers, and finally to the exterior finishing layer **50**. It will be appreciated that additional oil and grease absorbing layers **20**, additional oil barrier layers **30**, one or more core layers **60**, or combinations thereof may be added to create a multilayer coextruded film **10** with more than the five layers shown in FIGS 6 and 7. For example, the multilayer coextruded film **10** may include an interior sealing layer **40**, three oil and grease absorbing layers **20**, two oil barrier layers **30**, and an exterior finishing layer **50** where the oil barrier layer **30** is disposed between a set of two oil and grease absorbing layers **20** and a single oil and grease absorbing layer **20**.

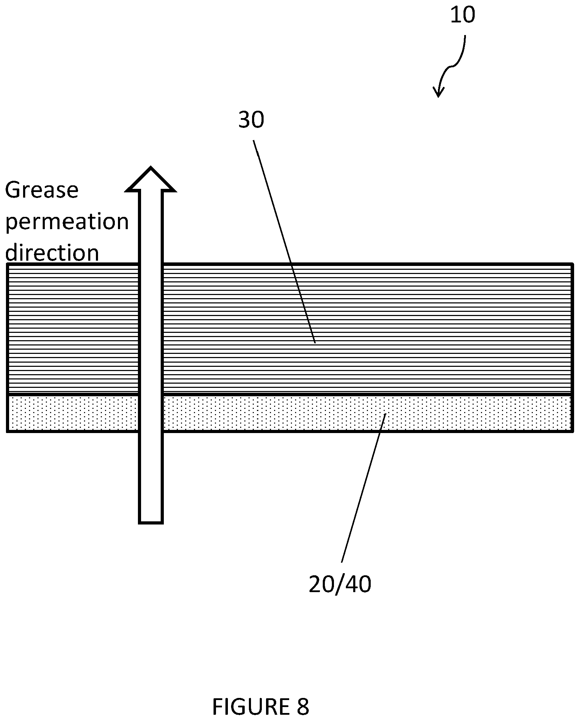

In some embodiments, the interior sealing layer **40** and an inner-most of the oil and grease absorbing layers **20** is combined into a single layer. Specifically, the single layer serves the function of both the interior sealing layer **40** and the oil and grease absorbing layer **20**. As such, the oil and grease absorbing layer **20** includes an interior sealing layer **40** at an interior surface. With reference to FIG. 8, a schematic of the layer structure of the multilayer coextruded film **10** according to some embodiments with a combined oil and grease absorbing layer **20** and interior sealing layer **40** is provided. A suitable commercial polymer for a combined oil and grease absorbing layer **20** and interior sealing layer **40** in non-food contact applications may be AMPLIFY™ TY 3351B from The Dow Chemical Company, Midland, MI. Additionally, a combined oil and grease absorbing layer **20** and interior sealing layer **40** may comprise a functional ethylene copolymer, for example, ethylene-vinyl acetate (EVA), ethylene acrylic acid (EAA), or ethyl methacrylate (EMA). Further, a combined oil and grease absorbing layer **20** and interior sealing layer **40** may comprise a POP such as an AFFINITY™ product from The Dow Chemical Company, Midland, MI. It will be appreciated that additional oil and grease absorbing layers **20**, oil barrier layers **30**, core layers **60**, or an exterior finishing layer **50** may be added to the schematic of FIG. 8 without departing from the scope of this disclosure.

In various embodiments, the multilayer coextruded films **10** can include 2, 3, 4, 5, 6, 7, 8, 9, 10, 11, even 30 layers. In many instances, the application of the multilayer coextruded film **10** may dictate the number of layers to be used. In certain embodiments, each layer can have a thickness of about 2 to about 75 $\mu$m (microns). In other embodiments, each can have a thickness of about 3 to about 50 $\mu$m (microns). In further embodiments, each layer can have a thickness of about 5 to about 30 $\mu$m (microns).

In various embodiments, the multilayer coextruded film **10** includes a toner or ink image printed on the exterior finishing layer **50**. The exterior finishing layer **50** may be printed using machinery and processes known in the art. By way of example and not limitation, the exterior finishing layer **50** may be printed by using corona printing, a digital press, and liquid toner/ink.

It should be understood that any of the films within the multilayer coextruded film **10** may contain various additives. Examples of such additives include antioxidants, ultraviolet light stabilizers, thermal stabilizers, slip agents, antiblock pigments or colorants, processing aids (such as fluoropolymers), crosslinking catalyst, flame retardants, fillers, foaming agents, and combinations thereof.

In order that various embodiments may be more readily understood, reference is made to the following examples which are intended to illustrate various embodiments, but do not limit the scope thereof.

The resins used for the production of the films are listed in Table 1 below.

Table 1: Resins used for film production

| Name | Commercial Name | Type | Melt Index (190°C 2.16kg) (g/10min) | Density (g/cm³) |
|---|---|---|---|---|
| Resin 1 | AMPLIFY™ TY 3351B | Maleic anhydride grafted (MAH) polyolefin-styrenic block copolymer blend | 3.0 | 0.94 |
| Resin 2 | ELITE™ 5960 | Enhanced high density polyethylene | 0.85 | 0.962 |
| Resin 3 | DOWLEX™ 2045G | Ziegler-Natta catalyzed linear low density polyethylene | 1.00 | 0.920 |

Film structures, which can include the resins of Table 1, are listed in Table 2 below. Multilayer films were prepared with a 5 layer arrangement to compare the grease barrier and absorptive characteristics of each of the three resins. The multilayer film thickness was set at 100 micrometers ($\mu$m) with each outside layer being 24.5 $\mu$m and each of the 3 internal layers being 17.0 $\mu$m. The multilayer film was coextruded to produce a multilayer film with the specified properties.

Table 2: Film structures

| Sample Number | | Sample 1 (Comparative) | Sample 2 (Comparative) | Sample 3 |
|---|---|---|---|---|
| LAYER 1 | 24.5 $\mu$m | DOWLEX™ 2045G | DOWLEX™ 2045G | DOWLEX™ 2045G |
| LAYER 2 | 17.0 $\mu$m | DOWLEX™ 2045G | ELITE™ 5960 | AMPLIFY™ TY 3351B |
| LAYER 3 | 17.0 $\mu$m | DOWLEX™ 2045G | ELITE™ 5960 | AMPLIFY™ TY 3351B |
| LAYER 4 | 17.0 $\mu$m | DOWLEX™ 2045G | ELITE™ 5960 | AMPLIFY™ TY 3351B |
| LAYER 5 | 24.5 $\mu$m | DOWLEX™ 2045G | DOWLEX™ 2045G | DOWLEX™ 2045G |

Each of samples 1, 2, and 3 were tested for grease permeation resistance. The testing of each sample was in accordance with ASTM method F119-82 which provides a test to measure rate of grease permeation of flexible packaging materials - (Rapid test). The testing procedure consists of preparing five 5x5 cm films samples and placing them on a clean ground-glass backing plate. A 20-mm diameter cotton flannel rifle cleaning patch disk is placed on top of each sample and over the cotton patch is placed a 50 gram (g) weight. The entire assembly (glass, test specimen, cotton disk and weight) are pre-heated to 60°C for 30 minutes (min). With the assembly still in the heated oven, the weights are removed, six drops of melted chicken fat is added to each cotton disk, and the weights are returned to the oiled patches. At periodic intervals of every 15 min for the first hour, every 30 min for the next 4 hours (h), and 1 time a day thereafter, the ground-glass plate surface is observed against a dark background. The time at which the first trace of wetting indicated by a reduction in light scattering in the ground-glass backing plate is visible at the position of the weight is recorded as failure time. The average, maximum and minimum time to failure are reported. The results of the grease permeation resistance testing are provided in Table 3 below.

Table 3: Chicken Grease Permeation Resistance (ASTM method F119-82)

| Sample | Layer Description | Time to Fail (hours) at 60°C |
|---|---|---|
| Sample 1 | DOWLEX™ 2045G<br>DOWLEX™ 2045G<br>DOWLEX™ 2045G<br>DOWLEX™ 2045G<br>DOWLEX™ 2045G | 48 hours |
| Sample 2 | DOWLEX™ 2045G<br>ELITE™ 5960<br>ELITE™ 5960<br>ELITE™ 5960<br>DOWLEX™ 2045G | 168 hours |

(continued)

| Sample | Layer Description | Time to Fail (hours) at 60°C |
|---|---|---|
| Sample 3 | DOWLEX™ 2045G<br>AMPLIFY™ TY 3351B<br>AMPLIFY™ TY 3351B<br>AMPLIFY™ TY 3351B<br>DOWLEX™ 2045G | 168 hours |

The chicken grease permeation resistance outlined in table 3 for each of samples 1, 2, and 3 demonstrates a comparative grease permeation resistance for the ELITE™ 5960 and the AMPLIFY™ TY 3351B. The AMPLIFY™ TY 3351B which includes a styrenic block copolymer provides similar grease permeation resistance as a traditional HDPE barrier material in ELITE™ 5960 and a superior resistance to DOWLEX™ 2045G LLDPE.

Each of samples 1, 2, and 3 were also tested for water vapor transmission rate (WVTR). The testing was completed at a temperature of 37.8 °C and a relative humidity of 100%. The results of the water vapor permeation testing are provided in Table 4 below.

Table 4: WVTR Permeation

| Sample | Layer Description | Film Thickness ($\mu$m) | (WVTR) (g/m$^2$-day) | Standard Deviation (g/m$^2$-day) |
|---|---|---|---|---|
| Sample 1 | DOWLEX™ 2045G<br>DOWLEX™ 2045G<br>DOWLEX™ 2045G<br>DOWLEX™ 2045G<br>DOWLEX™ 2045G | 104 | 2.140 | 0.0566 |
| Sample 2 | DOWLEX™ 2045G<br>ELITE™ 5960<br>ELITE™ 5960<br>ELITE™ 5960<br>DOWLEX™ 2045G | 102 | 1.080 | 0.0424 |
| Sample 3 | DOWLEX™ 2045G<br>AMPLIFY™ TY 3351B<br>AMPLIFY™ TY 3351B<br>AMPLIFY™ TY 3351B<br>DOWLEX™ 2045G | 100 | 2.890 | 0.0707 |

The water vapor permeation testing demonstrates the moisture barrier properties of Sample 2, which includes ELITE™ 5960, are improved relative to the baseline of DOWLEX™ 2045G. The oil barrier layer **30** not only reduces transmission of oil it also reduces transmission of moisture. It may also be noted from the water vapor permeation testing that Sample 3, which includes AMPLIFY™ TY 3351B and represents the oil and grease absorbing layer **20**, demonstrates an increased transmission of moisture compared to the baseline of DOWLEX™ 2045G. However, it may be understood that the combination of the oil barrier layer **30** (Samples 2) and the oil and grease absorbing layer **20** (Sample 3) have a synergy with one resulting in an increase in moisture transmission and the other resulting in a relative decrease in moisture transmission yielding a final film with acceptable moisture transmission resistance. It is noted that minimizing moisture transmission may be desirable because many greasy snack foods are also crunchy and transmission of moisture into the package would result in the greasy snack food becoming soggy.

The ELITE™ 5960 and the AMPLIFY™ TY 3351B were further tested in combination to provide the inventive synergistic relationship of an oil barrier layer **30** and an oil and grease absorbing layer **20** in combination. Multilayer films were prepared with a 5 layer arrangement to compare the grease permeation resistance of multilayer films formed from the DOWLEX™ 2045G, the ELITE™ 5960, and the AMPLIFY™ TY 3351B in varying orders. The multilayer film thickness was set at 100 micrometers ($\mu$m) with each outside layer being 24.5 $\mu$m and each of the 3 internal layers being 17.0 $\mu$m. The multilayer film was coextruded to produce a multilayer film with the specified properties.

Table 5: Film structures

| Sample Number | | Sample 4 | Sample 5 | Sample 6 | Sample 7 | Sample 8 |
|---|---|---|---|---|---|---|
| LAYER 1 | 24.5 μm | DOWLEX™ 2045G | DOWLEX™ 2045G | DOWLEX™ 2045G | DOWLEX™ 2045G | AMPLIFY™ TY 3351 B |
| LAYER 2 | 17.0 μm | ELITE™ 5960 | AMPLIFY™ TY 3351 B | AMPLIFY™ TY 3351B | ELITE™ 5960 | AMPLIFY™ TY3351B |
| LAYER 3 | 17.0 μm | AMPLIFY™ TY 3351B | ELITE™ 5960 | ELITE™ 5960 | AMPLIFY™ TY 3351B | AMPLIFY™ TY 3351B |
| LAYER 4 | 17.0 μm | ELITE™ 5960 | AMPLIFY™ TY 3351 B | ELITE™ 5960 | AMPLIFY™ TY 3351B | AMPLIFY™ TY 3351B |
| LAYER (Seal) | 24.5 μm | DOWLEX™ 2045G | DOWLEX™ 2045G | DOWLEX™ 2045G | DOWLEX™ 2045G | AMPLIFY™ TY 3351B |

Each of samples 4, 5, 6, 7, and 8 were tested for grease permeation resistance. The testing of each sample was in accordance with ASTM method F119-82 which provides a test to measure rate of grease permeation of flexible packaging materials - (Rapid test). Testing was complete in accordance with the procedures utilized for samples 1, 2, and 3 described *supra.* The results of the grease permeation resistance testing are provided in Table 6 below.

Table 6: Chicken Grease Permeation Resistance (ASTM method F119-82)

| Sample | Layer Description (Grease Migration from bottom to top) | Average Time to Fail at 60°C | Lowest Time to Fail at 60°C | Highest Time to Fail at 60°C |
|---|---|---|---|---|
| Sample 4 | DOWLEX™ 2045G<br>ELITE™ 5960<br>AMPLIFY™ TY 3351B<br>ELITE™ 5960<br>DOWLEX™ 2045G | 168 hours | --- | 168 hours (5 specimens) |
| Sample 5 | DOWLEX™ 2045G<br>AMPLIFY™ TY 3351B<br>ELITE™ 5960<br>AMPLIFY™ TY 3351B<br>DOWLEX™ 2045G | 269 hours | 168 hours (2 specimens) | 336 hours (3 specimens) |
| Sample 6 | DOWLEX™ 2045G<br>AMPLIFY™ TY 3351B<br>ELITE™ 5960<br>ELITE™ 5960<br>DOWLEX™ 2045G | 96 hours | ----- | 96 hours (5 specimens) |
| Sample 7 | DOWLEX™ 2045G<br>ELITE™ 5960<br>AMPLIFY™ TY 3351B<br>AMPLIFY™ TY 3351B<br>DOWLEX™ 2045G | 317 hours | 264 hours (2 specimens) | 360 hours (3 specimens) |
| Sample 8 | AMPLIFY™ TY 3351B<br>AMPLIFY™ TY 3351B<br>AMPLIFY™ TY 3351B<br>AMPLIFY™ TY 3351B<br>AMPLIFY™ TY 3351B | 67 hours | 48 hours (3 specimens) | 96 hours (2 specimens) |

The chicken grease permeation resistance testing of sample 4, 5, 6, 7, and 8 demonstrate the synergistic improvement to grease permeation resistance with a combination of the ELITE™ 5960 and the AMPLIFY™ TY 3351B layers. Specifically, the ELITE™ 5960 and the AMPLIFY™ TY 3351B layers when provided individually as in samples 2 and 3 demonstrated a time to failure of 168 hours, whereas numerous combinations of the ELITE™ 5960 and the AMPLIFY™ TY 3351B layers demonstrated the same or improved results. It is particularly noted from the chicken grease permeation resistance testing of sample 4, 5, 6, 7, and 8 that providing at least one AMPLIFY™ TY 3351B layer (oil and grease absorbing layer **20**) before the final ELITE™ 5960 layer (oil barrier layer **30**) provided improved results. Specifically, sample 7 provides two oil and grease absorbing layers **20** (AMPLIFY™ TY 3351B) before the oil barrier layer **30** (ELITE™ 5960) resulting in an average time to fail of 317 hours. Similarly, sample 5 provides one oil and grease absorbing layer **20** (AMPLIFY™ TY 3351B) before the single oil barrier layer **30** (ELITE™ 5960) and a second oil and grease absorbing layer **20** (AMPLIFY™ TY 3351B) after the single oil barrier layer **30** (ELITE™ 5960) resulting in an average time to fail of 269 hours.

Additionally, testing of the rate of oil absorption by the multilayer film was undertaken. The testing procedure consists of preparing 10 x 10 cm film samples and immersing the film samples in a soybean oil filled jar. The jars with the film samples were placed in an oven at 60°C. The initial mass and thickness of films were recorded. At periodic intervals of 1 hour, 3 hours, 1 day, 5 days, 8 days, and 9 days, the samples were recovered from the jar and placed between two oil absorbent papers and submitted to a light pressure for a few seconds to remove the excess of oil from the film surface. Then, the mass and thickness of each film were measured to check the oil absorption. The oil absorption rate of the sample was then calculated according to the following formula:

$$Absorption\ rate = \frac{weight\ of\ swelled\ sample - weight\ of\ initial\ sample}{weight\ of\ initial\ sample}$$

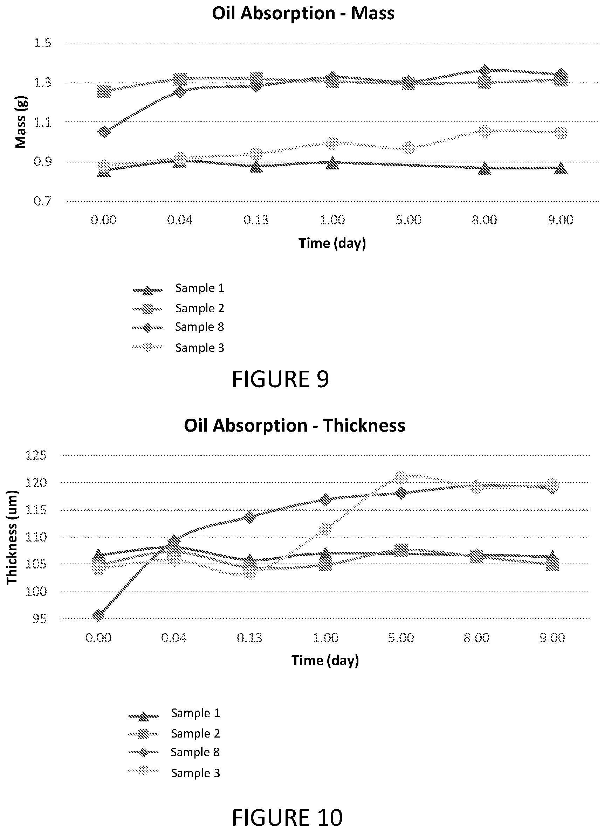

The results of the oil absorption testing are provided in Table 7 below and FIGS. 9 and 10.

Table 7: Oil Absorption Rate

| Sample | Absorption rate after 9 days (g/g) | % Increase in weight after 9 days | % Increase in thickness after 9 days |
|---|---|---|---|
| Sample 1 (100% DOWLEX™ 2045G) | 0.01 | 1.4 | -0.3 |
| Sample 8 (100% AMPLIFY™ TY 3351B) | 0.29 | 27.6 | 24.6 |
| Sample 2 (DOWLEX™ 2045G / ELITE™ 5960 / DOWLEX™ 2045G | 0.06 | 4.7 | 0.0 |
| Sample 3 (DOWLEX™ 2045G / AMPLIFY™ TY 3351B / DOWLEX™ 2045G) | 0.17 | 19.1 | 14.9 |

The oil absorption testing demonstrates that both the DOWLEX™ 2045 G (interior sealing layer **40** and exterior finishing layer **50**) and the ELITE™ 5960 (oil barrier layer **30**) substantially do not absorb oil. In the multilayer films of Examples 1-8, substantially all the oil absorption is the result of the AMPLIFY™ TY 3351B (oil and grease absorbing layer **20**). The oil absorption testing also demonstrates the reduction in the rate of oil absorption from encapsulating the oil and grease absorbing layer **20** (AMPLIFY™ TY 3351B) with polyolefins such as DOWLEX™ 2045G as the % increase in both weight and thickness is reduced compared to unencapsulated samples.

It should be understood that the various aspects of a multilayer coextruded film are described and such aspects may be utilized in conjunction with various other aspects.

**Claims**

1.  A multilayer coextruded film comprising:

at least one oil and grease absorbing layer, wherein the at least one oil and grease absorbing layer comprises at least one styrenic block copolymer; and
at least one oil barrier layer, wherein each oil barrier layer comprises one or more polyolefins;
where the at least one oil and grease absorbing layer further comprises maleic-anhydride grafted polyolefin.

2. The multilayer coextruded film of claim 1 further comprising an interior sealing layer.

3. The multilayer coextruded film of any preceding claim further comprising an exterior finishing layer, where the at least one oil barrier layer and the at least one oil and grease absorbing layer are disposed between the interior sealing layer and the exterior finishing layer.

4. The multilayer coextruded film of any preceding claim where at least one of the oil and grease absorbing layers is disposed between the interior sealing layer and the at least one oil barrier layer.

5. The multilayer coextruded film of any preceding claim where at least one of the oil barrier layers is disposed between the interior sealing layer and the at least one oil and grease absorbing layer.

6. The multilayer coextruded film of any of claims 1 or 3-5 where at least one oil and grease absorbing layer includes an interior sealing layer at an interior surface.

7. The multilayer coextruded film of any of claims 1-6 where the at least one oil and grease absorbing layer comprises a blend of styrenic block copolymers and polyolefins, particularly a blend of styrenic block copolymer and polyolefins selected from polyethylene or polypropylene, and more particularly a blend of styrenic block copolymers and polyethylene.

8. The multilayer coextruded film of any of claims 1-7 where the styrenic block copolymer is selected from styrene-butadiene-styrene, styrene-isoprene-styrene, styrene-ethylene/butylene-styrene, or combinations thereof, or particularly styrene-butadiene-styrene.

9. The multilayer coextruded film of any preceding claim where the at least one oil and grease absorbing layer comprises 5 to 99 % by weight styrenic block copolymer, or particularly 20 to 70 % by weight styrenic block copolymer.

10. The multilayer coextruded film of any of claims 1-6 wherein the at least one oil and grease absorbing layer comprises 20 to 50 % by weight styrene-butadiene-styrene, 35 to 65 % by weight polyethylene, and 5 to 25 % by weight maleic-anhydride grafted polyolefin.

11. The multilayer coextruded film of any preceding claim where the at least one oil barrier layer comprises 20 to 99% polyethylene, the polyethylene selected from high density polyethylene, medium density polyethylene, linear low-density polyethylene, ultra-low density polyethylene, or combinations thereof.

12. The multilayer coextruded film of any preceding claim where the interior sealing layer comprises a polyolefin material.

13. The multilayer coextruded film of any preceding claim where the exterior finishing layer comprises a polyolefin material.

**Patentansprüche**

1. Eine koextrudierte Mehrschichtfolie, die Folgendes beinhaltet:

mindestens eine Öl und Fett absorbierende Schicht, wobei die mindestens eine Öl und Fett absorbierende Schicht mindestens ein Styrolblockcopolymer beinhaltet; und
mindestens eine Ölsperrschicht, wobei jede Ölsperrschicht ein oder mehrere Polyolefine beinhaltet;
wobei die mindestens eine Öl und Fett absorbierende Schicht ferner mit Maleinsäureanhydrid gepfropftes Polyolefin beinhaltet.

2. Koextrudierte Mehrschichtfolie gemäß Anspruch 1, die ferner eine innere Schweißschicht beinhaltet.

3. Koextrudierte Mehrschichtfolie gemäß einem der vorhergehenden Ansprüche, die ferner eine äußere Deckschicht beinhaltet, wobei die mindestens eine Ölsperrschicht und die mindestens eine Öl und Fett absorbierende Schicht zwischen der inneren Schweißschicht und der äußeren Deckschicht angeordnet sind.

4. Koextrudierte Mehrschichtfolie gemäß einem der vorhergehenden Ansprüche, wobei mindestens eine der Öl und Fett absorbierenden Schichten zwischen der inneren Schweißschicht und der mindestens einen Ölsperrschicht angeordnet ist.

5. Koextrudierte Mehrschichtfolie gemäß einem der vorhergehenden Ansprüche, wobei mindestens eine der Ölsperrschichten zwischen der inneren Schweißschicht und der mindestens einen Öl und Fett absorbierenden Schicht angeordnet ist.

6. Koextrudierte Mehrschichtfolie gemäß Anspruch 1 oder 3-5, wobei mindestens eine Öl und Fett absorbierende Schicht eine innere Schweißschicht an einer inneren Oberfläche umfasst.

7. Koextrudierte Mehrschichtfolie gemäß einem der Ansprüche 1-6, wobei die mindestens eine Öl und Fett absorbierende Schicht Folgendes beinhaltet: ein Gemisch aus Styrolblockcopolymeren und Polyolefinen, insbesondere ein Gemisch aus Styrolblockcopolymer und Polyolefinen, die aus Polyethylen und Polypropylen ausgewählt sind, und insbesondere ein Gemisch aus Styrolblockcopolymeren und Polyethylen.

8. Koextrudierte Mehrschichtfolie gemäß einem der Ansprüche 1-7, wobei das Styrolblockcopolymer ausgewählt ist aus Styrol-Butadien-Styrol, Styrol-Isopren-Styrol, Styrol-Ethylen/Butylen-Styrol oder Kombinationen davon oder insbesondere aus Styrol-Butadien-Styrol.

9. Koextrudierte Mehrschichtfolie gemäß einem der vorhergehenden Ansprüche, wobei die mindestens eine Öl und Fett absorbierende Schicht zu 5 bis 99 Gew.-% ein Styrolblockcopolymer, oder insbesondere zu 20 bis 70 Gew.-% ein Styrolblockcopolymer, beinhaltet.

10. Koextrudierte Mehrschichtfolie gemäß einem der Ansprüche 1-6, wobei die mindestens eine Öl und Fett absorbierende Schicht zu 20 bis 50 Gew.-% Styrol-Butadien-Styrol, zu 35 bis 65 Gew.-% Polyethylen und zu 5 bis 25 Gew.-% mit Maleinsäureanhydrid gepfropftes Polyolefin beinhaltet.

11. Koextrudierte Mehrschichtfolie gemäß einem der vorhergehenden Ansprüche, wobei die mindestens eine Ölsperrschicht zu 20 bis 99 % Polyethylen beinhaltet, wobei das Polyethylen ausgewählt ist aus Polyethylen hoher Dichte, Polyethylen mittlerer Dichte, linearem Polyethylen niedriger Dichte, Polyethylen ultraniedriger Dichte oder Kombinationen davon.

12. Koextrudierte Mehrschichtfolie gemäß einem der vorhergehenden Ansprüche, wobei die innere Schweißschicht ein Polyolefinmaterial beinhaltet.

13. Koextrudierte Mehrschichtfolie gemäß einem der vorhergehenden Ansprüche, wobei die äußere Deckschicht ein Polyolefinmaterial beinhaltet.


**Revendications**

1. Un film coextrudé multicouche comprenant :

    au moins une couche absorbant l'huile et la graisse, dans lequel l'au moins une couche absorbant l'huile et la graisse comprend au moins un copolymère séquencé styrénique ; et
    au moins une couche formant barrière à l'huile, dans lequel chaque couche formant barrière à l'huile comprend une ou plusieurs polyoléfines ;
    où l'au moins une couche absorbant l'huile et la graisse comprend en outre une polyoléfine greffée avec de l'anhydride maléique.

2. Le film coextrudé multicouche de la revendication 1 comprenant en outre une couche de scellement intérieure.

3. Le film coextrudé multicouche de n'importe quelle revendication précédente comprenant en outre une couche de finition extérieure, où l'au moins une couche formant barrière à l'huile et l'au moins une couche absorbant l'huile et la graisse sont disposées entre la couche de scellement intérieure et la couche de finition extérieure.

4. Le film coextrudé multicouche de n'importe quelle revendication précédente où au moins une des couches absorbant l'huile et la graisse est disposée entre la couche de scellement intérieure et l'au moins une couche formant barrière à l'huile.

5. Le film coextrudé multicouche de n'importe quelle revendication précédente où au moins une des couches formant barrière à l'huile est disposée entre la couche de scellement intérieure et l'au moins une couche absorbant l'huile et la graisse.

6. Le film coextrudé multicouche de n'importe lesquelles des revendications 1 ou 3 à 5 où au moins une couche absorbant l'huile et la graisse inclut une couche de scellement intérieure au niveau d'une surface intérieure.

7. Le film coextrudé multicouche de n'importe lesquelles des revendications 1 à 6 où l'au moins une couche absorbant l'huile et la graisse comprend un mélange homogène de copolymères séquencés styréniques et de polyoléfines, particulièrement un mélange homogène de copolymère séquencé styrénique et de polyoléfines sélectionnées parmi le polyéthylène ou le polypropylène, et plus particulièrement un mélange homogène de copolymères séquencés styréniques et de polyéthylène.

8. Le film coextrudé multicouche de n'importe lesquelles des revendications 1 à 7 où le copolymère séquencé styrénique est sélectionné parmi le styrène-butadiène-styrène, le styrène-isoprène-styrène, le styrène-éthylène/butylène-styrène, ou des combinaisons de ceux-ci, ou particulièrement le styrène-butadiène-styrène.

9. Le film coextrudé multicouche de n'importe quelle revendication précédente où l'au moins une couche absorbant l'huile et la graisse comprend 5 à 99 % en poids de copolymère séquencé styrénique, ou particulièrement 20 à 70 % en poids de copolymère séquencé styrénique.

10. Le film coextrudé multicouche de n'importe lesquelles des revendications 1 à 6 dans lequel l'au moins une couche absorbant l'huile et la graisse comprend 20 à 50 % en poids de styrène-butadiène-styrène, 35 à 65 % en poids de polyéthylène, et 5 à 25 % en poids de polyoléfine greffée avec de l'anhydride maléique.

11. Le film coextrudé multicouche de n'importe quelle revendication précédente où l'au moins une couche formant barrière à l'huile comprend 20 à 99 % de polyéthylène, le polyéthylène étant sélectionné parmi le polyéthylène haute densité, le polyéthylène moyenne densité, le polyéthylène linéaire basse densité, le polyéthylène ultra-basse densité, ou des combinaisons de ceux-ci.

12. Le film coextrudé multicouche de n'importe quelle revendication précédente où la couche de scellement intérieure comprend un matériau polyoléfine.

13. Le film coextrudé multicouche de n'importe quelle revendication précédente où la couche de finition extérieure comprend un matériau polyoléfine.

FIGURE 1

10

50

Grease
permeation
direction

60

30

20

40

FIGURE 2

FIGURE 3

FIGURE 4

FIGURE 5

FIGURE 6

FIGURE 7

10

30

Grease
permeation
direction

20/40

FIGURE 8

**Oil Absorption - Mass**

Sample 1
Sample 2
Sample 8
Sample 3

FIGURE 9

**Oil Absorption - Thickness**

Sample 1
Sample 2
Sample 8
Sample 3

FIGURE 10

**EP 3 519 184 B1**

**Patent documents cited in the description**

- US 62401515

- WO 2012078129 A